# EUROPEAN PATENT APPLICATION

(11) **EP 4 412 177 A1**
(43) Date of publication of application: **07.08.2024**
(21) Application number: 22876995.6
(22) Date of filing: 05.10.2022
(51) Int. Cl.: H04L 47/41, H04L 47/28, H04L 49/351, H04L 5/00, H04L 1/00

(54) **COMBINATION METHOD FOR CONFIGURING SHARED CELL OF O-RAN**

(30) Priority: 01.10.2021 KR 20210131150
(71) Applicant: Solid Labs, Inc., Seongnam-si, Gyeonggi-do 13493 (KR)
(72) Inventor: HONG, Hoonui, Seongnam-si, Gyeonggi-do, 13493 (KR); MOON, Woosik, Seongnam-si, Gyeonggi-do, 13493 (KR); KIM, Hyunchae, Seongnam-si, Gyeonggi-do, 13493 (KR)
(74) Representative: Frenkel, Matthias Alexander
(86) International application number: PCT/KR2022/014929
(87) International publication number: WO 2023/055224

(57) **Abstract**

According to one aspect of the technical idea of the present disclosure, a method of operating a node device in an open radio access network (O-RAN) is disclosed, including receiving messages related to a user-plane from at least one south-node device, and determining combining operation timing of the messages in an extended antenna-carrier (eAxC) unit, based on the messages.

## Description

### TECHNICAL FIELD

The present disclosure relates to wireless communication including combining schemes for a shared cell configuration of an open radio access network (O-RAN).

### BACKGROUND ART

An O-RAN alliance announced a specification defining an architecture for implementing a next-generation radio access network (RAN) infrastructure. "O-RAN" means an open RAN, and an O-RAN architecture uses "O-RAN distributed unit (O-DU)" and "O-RAN remote unit (O-RU)." Each O-DU implements layer 2 and upper layer 1 functions for a wireless interface used to communicate wirelessly with user equipment, and each O-RU implements lower layer 1 functions for the wireless interface. Each O-DU and each O-RU are communicationally connected to each other through a fronthaul link.

The O-RAN alliance has published a specification defining an open fronthaul interface for communication between an O-DU and an O-RU over a fronthaul. For example, O-RAN fronthaul working group 4 provides "control, user and synchronization plane specification" that specifies a functional split used between functions implemented in an O-DU and an O-RU.

In an initial version of an O-RAN specification, only a point-to-point configuration in which each O-DU is paired with one O-RU and serves one physical cell and an individual O-RAN fronthaul interface for each O-DU and O-RU pair are specified. However, recently, an O-RAN specification is being developed that defines additional configurations that can be used to implement a "shared cell" where one O-DU is paired with multiple O-RUs to serve one physical cell.

In a recently published O-RAN specification, a shared cell is exemplified as having a topology in which one O-DU communicates with multiple O-RUs through a fronthaul including a fronthaul multiplexer (FMH), a topology in which one O-DU communicates with multiple O-RUs connected to each other in cascade, and a topology in which these are combined.

In the shared cell, O-RUs connected to the FHM in cascade copy and deliver messages in a downlink direction, and combine and deliver messages in an uplink direction. Due to this copy/combining processing, as the number of O-RUs configuring a shared cell and the number of carriers supported by the O-RUs increase and a connection architecture of the FHM and the O-RUs becomes more complex, network congestion in O-RAN, a packet-based network, increases significantly. This is especially problematic in an uplink direction, where messages need to be combined within limited time resources, and causes serious physical constraints in fronthaul implementation.

Therefore, effective combining schemes for uplink messages for a shared cell may be needed.

### DESCRIPTION OF EMBODIEMENTS

### TECHNICAL PROBLEM

Provided are combining schemes for shared cell configuration of O-RAN that may effectively use limited time resources.

The present disclosure is not limited to the above objective(s), but other objective(s) not described herein may be clearly understood by one of ordinary skill in the art from descriptions below.

### SOLUTION TO PROBLEM

According to an aspect of the present disclosure, there is provided a method of operating a node device in an open radio access network (O-RAN), including receiving messages related to a user-plane from at least one south-node device; and determining combining operation timing of the messages in an extended antenna-carrier (eAxC) unit, based on the messages.

According to an exemplary embodiment, the determining may include determining whether a final message in the eAxC unit is received from at least one port; and generating, when it is determined that the final message is received, a first combining trigger that indicates the combining operation timing of the messages in the eAxC unit.

According to an exemplary embodiment, the determining may include determining based on whether the messages in the eAxC unit are consecutively received from the at least one port.

According to an exemplary embodiment, the determining may include determining whether an initial message in the eAxC unit is received from at least one port; and generating, when it is determined that the initial message is received, a second combining trigger that indicates the combining operation timing of the messages in the eAxC unit.

According to an exemplary embodiment, the generating of the second combining trigger may include generating the second combining trigger by delaying timing at which the initial message is received by a preset time.

According to an exemplary embodiment, the at least one south-node device may include a plurality of south-node devices, and the determining may include using messages received from a south-node device with a largest transmission delay to the node device from among the plurality of south-node devices.

According to an exemplary embodiment, among the messages, messages in an identical eAxC unit may be received consecutively.

According to an exemplary embodiment, the at least one south-node device may include a plurality of south-node devices, and, in messages received from each of the plurality of south-node devices, a reception order based on the eAxC unit may be identical.

According to an exemplary embodiment, the method may further include combining the messages in the eAxC unit according to the determined timing; and transmitting the combined messages to a north-node device in a combining order.

According to another aspect of the present disclosure, there is provided a node device of O-RAN, including at least one processor, wherein the at least one processor is configured to determine combining operation timing of messages related to a user-plane received from at least one south-node device in an eAxC unit based on the messages.

According to an exemplary embodiment, the at least one processor may be further configured to: determine whether a final message in the eAxC unit is received from at least one port; and generate, when it is determined that the final message is received, a first combining trigger that indicates the combining operation timing of the messages in the eAxC unit.

According to an exemplary embodiment, the at least one processor may be further configured to: determine whether the final message in the eAxC unit is received based on whether the messages in the eAxC unit are consecutively received from the at least one port.

According to an exemplary embodiment, the at least one processor may be further configured to: determine whether an initial message in the eAxC unit is received from at least one port; and generate, when it is determined that the initial message is received, a second combining trigger that indicates the combining operation timing of the messages in the eAxC unit.

According to an exemplary embodiment, the at least one processor may be further configured to: generate the second combining trigger by delaying timing at which the initial message is received by a preset time.

According to an exemplary embodiment, the at least one south-node device may include a plurality of south-node devices, and the at least one processor may be further configured to: determine the combining operation timing of the messages in the eAxC unit by using messages received from a south-node device with a largest transmission delay to the node device from among the plurality of south-node devices.

According to an exemplary embodiment, among the messages, messages in an identical eAxC unit may be received consecutively.

According to an exemplary embodiment, the at least one south-node device may include a plurality of south-node devices, and in messages received from each of the plurality of south-node devices, a reception order based on the eAxC unit may be identical.

According to an exemplary embodiment, the at least one processor may be further configured to: combine the messages in the eAxC unit according to the determined timing; and control transmission of the combined messages to a north-node device in a combining order.

### ADVANTAGEOUS EFFECTS OF DISCLOSURE

According to example embodiments of the present disclosure, by controlling combining timing and combining operation of messages related to a user-plane on an extended antenna-carrier (eAxC) basis, a shared cell may be effectively configured and operated even under limited fronthaul time resources.

Effect(s) obtainable by the present disclosure are not limited to the effect(s) described above, but other effects not described herein may be clearly understood by one of ordinary skill in the art from the above descriptions.

### BRIEF DESCRIPTION OF DRAWINGS

A brief description of each drawing is provided to more fully understand drawings recited in the present disclosure.
FIG. 1 is a conceptual diagram for explaining a shared cell configuration of O-RAN.
FIG. 2 is a view for explaining a user-plane message combining scheme in a node device configuring a shared cell, according to an example embodiment of the present disclosure.
FIG. 3 is a view for explaining a frame format of a user-plane message applied to a combining scheme, according to an example embodiment of the present disclosure.
FIGS. 4 to 11 are views for explaining a node device supporting combining schemes and an operation method of the node device, according to an example embodiment of the present disclosure.
FIGS. 12 to 14 are flowcharts for explaining an operation method of a node device supporting combining schemes, according to an example embodiment of the present disclosure.

### MODE OF DISCLOSURE

The terms used in the present disclosure, only certain embodiments have been used to describe, is not intended to limit the scope of other embodiments. As used herein, the singular forms "a", "an", and "the" are intended to include the plural forms as well, unless the context clearly indicates otherwise. The terms (including technical and scientific terms) used herein have the same meaning as commonly understood by one of ordinary skill in the art to which embodiments belong. It will be further understood that the terms used in the present disclosure, such as those defined in commonly used dictionaries, should be interpreted as having a meaning that is consistent with their meaning in the context of the relevant art and will not be interpreted in an idealized or overly formal sense unless expressly so defined herein. In some cases, even terms defined in the present disclosure cannot be interpreted to exclude embodiments of the present disclosure.

In various embodiments of the present disclosure described later below, a hardware approach is mainly described as an example. However, because various embodiments of the present disclosure include a technology using both hardware and software, the various embodiments of the present disclosure do not exclude a software-based approach.

The various illustrative logical blocks/sections, modules, circuits, or processors described in connection with the present disclosure may be implemented or performed by a general-purpose processor designed to perform the functions disclosed herein, a digital signal processor (DSP), an application specific integrated circuit (ASIC), a field-programmable gate array (FPGA) or other programmable logic device (PLD), a discrete gate or transistor logic device, discrete hardware components, or any combination thereof. The general-purpose processor may be a microprocessor, but may alternatively be any commercially available processor, controller, microcontroller, or state machine. The processor may also be implemented in a combination of computing devices, for example, a combination of the DSP and the microprocessor, a plurality of microprocessors, one or more microprocessors in connection with a DSP core, or any other configuration.

Terms referring to signals (e.g., message, information, preamble, signal, signaling, sequence, or stream), terms referring to resources (e.g., symbol, slot, subframe, radio frame, subcarrier, resource element (RE), resource block (RB), bandwidth part (BWP), or opportunity), terms referring to operation states (e.g., step, operation, or procedure), terms referring to data (e.g., packet, user stream, information, bit, symbol, or codeword), terms referring to channels, terms referring to control information (e.g., downlink control information (DCI), medium access control element (MAC CE), or radio resource control (RRC) signaling), terms referring to network entities, terms referring to device components, etc. used in the following description are exemplified for convenience of explanation. Accordingly, the present disclosure is not limited to the terms described below, and other terms having equivalent technical meanings may be used.

Furthermore, in the present disclosure, the expression "greater than" or "less than" may be used to determine whether a specific condition is satisfied or fulfilled, but this is only a description to express an example and does not exclude the description of "equal to or greater than" or "equal to or less than." Conditions written as "equal to or greater than" may be replaced with "greater than", conditions written as "equal to or less than" may be replaced with "less than", and conditions written as "equal to or greater than and less than" may be replaced with "greater than and less than."

In addition, the present disclosure describes various embodiments using terminology used in some communication standards (e.g., 3rd generation partnership project (3GPP), extensible radio access network (xRAN), or open-radio access network (O-RAN)), but this is only an example for explanation. Various embodiments of the present disclosure may be easily modified and applied to other communication systems.

Hereinafter, various embodiments according to the technical idea of the present disclosure will be described in detail one by one.

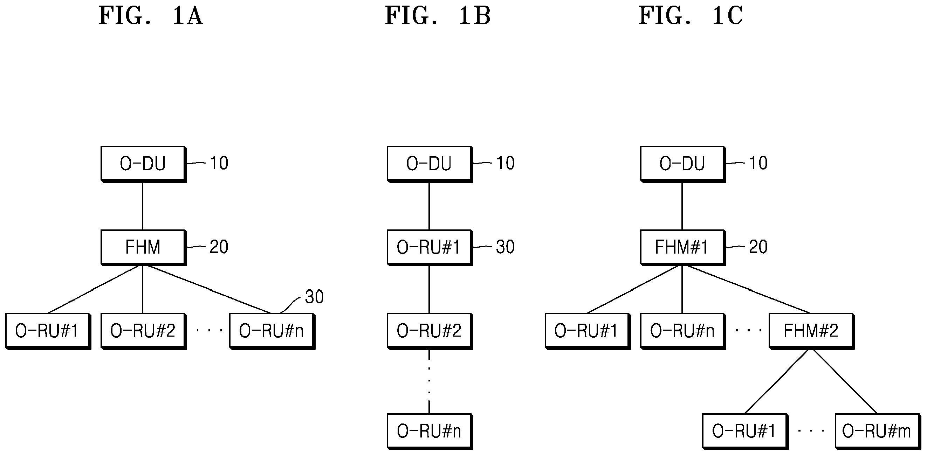

FIG. 1 is a conceptual diagram for explaining a shared cell configuration of O-RAN.

First, a first shared cell configuration will be described with reference to FIG. 1 (a). In the first shared cell configuration, an O-DU 10 is paired with a number of O-RUs 30 (e.g., O-RU#1 to O-RU#n), and the O-DU 10 and O-RUs 30 communicate with each other through a fronthaul including an FHM 20. The FHM 20 is modeled as an O-RU with copy and combine functions added in addition to a lower layer split (LLS) fronthaul support function like a general O-RU, but may refer to a node device without wireless transmission and reception functions. The first shared cell configuration may be referred to as an FHM mode.

In a downlink (e.g., a path from a north-node to a south-node), the O-DU 10 transmits a copy version of each of control-plane and user-plane messages to the FHM 20, and the FHM 20 copies each of the control-plane and user-plane messages and transmits each copy version to the plurality of O-RUs 30.

In an uplink (e.g., a path from a south-node to a north-node), each O-RU 30 transmits a user-plane message to the FHM 20, and the FHM 20 combines resource elements REs received from the O-RUs 30 and then transmits a single user-plane message including the combined REs to the O-DU 10.

A second shared cell configuration will be described with reference to FIG. 1 (b). In the second shared cell configuration, the O-DU 10 is paired with the plurality of O-RUs 30 (e.g., O-RU#1 to O-RU#n). Cascade topology is applied to implement a fronthaul for mutual communication between the O-DU 10 and the O-RUs 30. The O-DU 10 communicates directly with the first O-RU (e.g., O-RU#1) in a cascade, and each O-RU in the cascade communicates directly with a preceding O-RU immediately before itself and a succeeding O-RU immediately behind itself. The second shared cell configuration may be referred to as a cascade mode.

In a downlink, the O-DU 10 transmits a copy version of each of control-plane and user-plane messages to the first O-RU (e.g., O-RU#1) from among O-RUs 30 connected in cascade. Each O-RU in the cascade uses each message received from the preceding O-RU and transmits a copy version to the succeeding O-RU in the cascade.

In an uplink, the last O-RU (e.g., O-RU#n) from among the O-RUs 30 connected in cascade transmits a user-plane message including an RE generated from a received RF signal to the immediately preceding O-RU. In the cascade, each O-RU combines an RE included in a user-plane message received from the immediately succeeding O-RU with an RE generated from a received RF signal, and transmits it to the immediately preceding O-RU as a single user-plane message.

When explaining a third shared cell configuration with reference to FIG. 1 (c), the third shared cell configuration is a hybrid configuration of the first and second shared cell configurations described above. The O-DU 10 communicates with multiple O-RUs (O-RU#1 to O-RU#n) through a fronthaul including FHM#1 from among FHMs 20 connected in cascade, and communicates with multiple O-RUs (O-RU#1 to O-RU#m) through a fronthaul including FHM#2 from among the FHMs 20 connected in cascade. The third shared cell configuration may be referred to as a cascade-FHM mode, and because communication between the O-DU 10, the FHM 20, and the O-RUs 30 in the downlink and the uplink is substantially the same as the methods previously described with reference to FIG. 1 (a) and (b), detailed descriptions are omitted.

As described above, in the first to third shared cell configurations, copy and combining processing of messages in the FHM and cascade O-RUs, which are nodes configuring the fronthaul, are required. As a result, as the number of nodes in a shared cell increases, a connection architecture between the nodes becomes complicated. In addition, as the number of supported carriers increases, network congestion greatly increases in O-RAN, a packet-based network, and operation control becomes difficult, placing serious physical constraints on network implementation.

This is particularly problematic in an uplink direction. According to a general combining scheme, due to differences in transmission delay depending on physical/logical locations of nodes, the arrival time of symbol-level messages to be combined at an FHM and cascade O-RUs is not constant. In addition, because nodes transmit messages about various resource elements in a random order, it is difficult to control combining timing and combining operation. Furthermore, because an allowable fronthaul delay is limited, each node cannot provide sufficient waiting time and processing time for symbol-level messages to be combined, making it difficult to respond to error situations.

The technical idea of the present disclosure is to solve the above-mentioned problems, and proposes a method of using an extended antenna-carrier (eAxC) unit as a combining unit of messages related to a user-plane in a shared cell configuration and controlling combining timing and combining operation of messages in the eAxC unit.

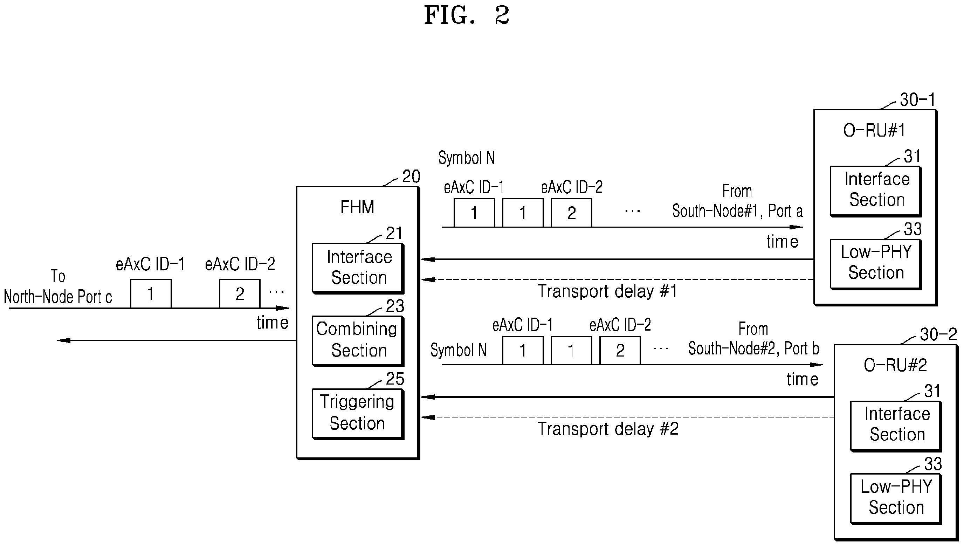

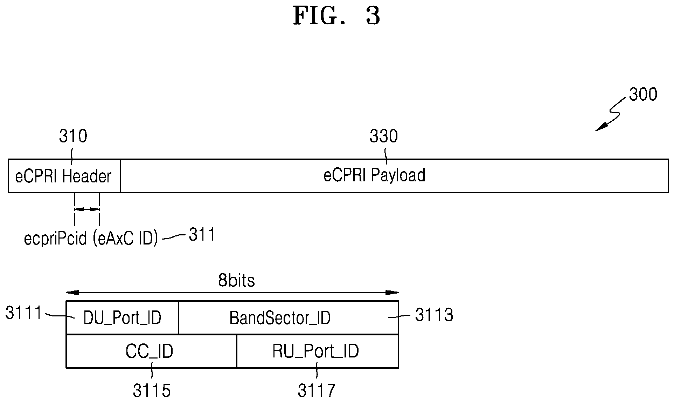

FIG. 2 is a view for explaining a user-plane message combining scheme in a node device configuring a shared cell, according to an example embodiment of the present disclosure, and FIG. 3 is a view for explaining a frame format of a user-plane message applied to a combining scheme, according to an example embodiment of the present disclosure. In FIG. 2, for convenience of explanation, an embodiment in which a shared cell configuration is implemented in FHM mode, and the FHM 20 receives user-plane messages about one antenna port from O-RUs, respectively, and combines the user-plane messages is exemplarily shown.

Referring to FIG. 2, a shared cell configuration according to an example embodiment of the present disclosure may include the FHM 20, O-RU#1 30-1, and O-RU#2 30-2.

First, O-RU#1 30-1 and O-RU#2 30-2 may include an interface section 31 and a Low-PHY section 33, respectively. Although not shown, each of O-RU#1 30-1 and O-RU#2 30-2 may further include at least one antenna port (and/or antenna) for transmitting and receiving wireless signals to and from a user device, and an RF section (or RF transceiver) for digital conversion processing of wireless signals. Terms such as "...section", "-er", and "-or" used below mean a unit that processes at least one function or operation, and may be implemented as hardware, software, or a combination of hardware and software. In addition, at least some operations and actions of one section may be performed in other section(s), and one section may be integrated into other section(s).

The low-PHY section 33 may generate IQ data based on a wireless signal received through at least one antenna port (antenna) and digitally converted through an RF section.

The low-PHY section 33 may generate a message related to a user-plane that follows a fronthaul transport protocol based on the generated IQ data. The transport protocol may be Ethernet or eCPRI, which are easy to share with a network, and a frame format 300 of the message may have a structure shown in FIG. 3.

With further reference to FIG. 3, the frame format 300 of the message may include an eCPRI header 310 and an eCPRI payload 330. The eCPRI header 310 may include a message source and destination identifier (ecpriPcid), and an O-RAN fronthaul specification specifies the eAxC (eAxC ID) 311 as the message source and destination identifier (ecpriPcid). The eAxC 311 includes an O-DU port identifier (DU_Port_ID) 3111, a band sector identifier (BandSector_ID) 3113, a component carrier identifier (CC_ID) 3115, and an O-RU port identifier (RU_Port_ID) 3117.

The low-PHY section 33 may be configured to generate a message in an eAxC unit by grouping IQ data with the same eAxC from among pieces of IQ data for each antenna port. The message in the eAxC unit may be a single message, but is not limited thereto, and may be fragmented and composed of multiple messages.

The interface section 31 may transmit messages in the eAxC unit to the FHM 20 through a fronthaul link.

The interface section 31 may consecutively transmit messages with the same eAxC from among the messages in the eAxC unit to the FHM 20.

Furthermore, the interface section 31 may transmit the message(s) in the eAxC unit to the FHM 20 according to a preset transmission order. In more detail, a transmission order may be preset for each eAxC, and the interface section 31 may transmit the messages in the eAxC unit according to the corresponding transmission order.

For example, as shown in FIG. 2, the interface section 31 may transmit the messages in the eAxC unit for a specific antenna port to the FHM 20 in ascending order of eAxC ID numbers (eAxC ID-1, eAxC ID-2,...), but is not limited to thereto. The interface section 31 may transmit the messages in the eAxC unit for a specific antenna port to the FHM 20 in descending order of eAxC ID numbers or in a certain pattern order of eAxC ID numbers.

The transmission order may be preset by the O-DU 10 (see FIG. 1) and may be updated according to network operating environment/state, service provider request, etc. The update of the transmission order may be performed in real time, but is not limited thereto. In addition, setting and updating the transmission order may be performed remotely, but is not limited thereto.

As such, each of O-RU#1 30-1 and O-RU#2 30-2 may generate messages in an eAxC unit for at least one antenna port, and may transmit the messages in the eAxC unit for the antenna port to the FHM 20 in an identical eAxC unit transmission order.

The FHM 20 may include an interface section 21, a combining section 23, and a triggering section 25.

First, the triggering section 25 may determine timing of operation of combining the messages in an eAxC unit (hereinafter referred to as combining operation timing) based on messages received from at least one of south-nodes, that is, O-RU#1 30-1 and O-RU#2 30-2. The above-mentioned term "determine" encompasses various actions. For example, the term "determine" may include computing, processing, deriving, examining, looking up (e.g., looking up in a table, database, or other data structure), identifying, and the like. In addition, the term "determine" may also include receiving (e.g., receiving information), accessing (accessing data in a memory), and the like. Furthermore, the term "determine" may also include resolving, selecting, choosing, establishing, and the like.

In an embodiment, the triggering section 25 may determine whether a final message is received for each eAxC unit from among the received messages and determine the combining operation timing based on a determination result.

In another embodiment, the triggering section 25 may determine whether an initial message is received for each eAxC unit from among the received messages and determine the combining operation timing based on a determination result.

In another embodiment, the triggering section 25 may determine the combining operation timing using waiting time-related information calculated based on a frame structure applied to a message in the eAxC unit and timing of a control-plane message applied to the eAxC unit, along with the result of determining whether the final message or the initial message described above is received for each eAxC unit.

In performing the above-described examples, the triggering section 25 may determine the combining operation timing by using only messages received from O-RU#2 30-2, which has a large transmission delay with respect to the FHM20, from among O-RU#1 30-1 and O-RU#2 30-2, without using all messages received from each of O-RU#1 30-1 and O-RU#2 30-2.

In the concept of triggering a combining operation based on whether messages are received last/first, because messages from a south-node with the largest transmission delay are likely to arrive later than messages from other south-nodes from among several south-nodes in the FHM 20, triggering may be controlled based on a specific path from a viewpoint of preventing additional delay through combining operation timing control and simplification of processing. Although a specific south node is exemplified as an object of comparison for transmission delay values, it is not limited thereto, and a specific antenna port, etc. may be selected as an object of comparison.

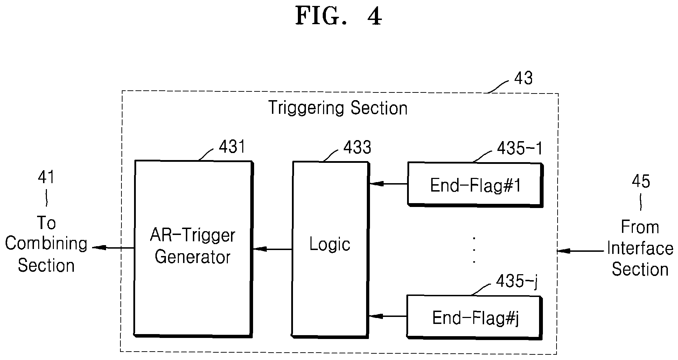

The triggering section 25 will be described in more detail below with reference to FIGS. 4 to 11.

The combining section 23 may combine messages in an identical eAxC unit according to combining operation timing determined by the triggering section 25. For example, as shown in FIG. 2, messages about each antenna port (e.g., Port a of O-RU#1 or Port b of O-RU#2) may be combined in units of eAxC ID-1 and eAxC ID-2. The message combining in the identical eAxC unit in the combining section 23 may mean combining IQ data samples of messages in a corresponding eAxC-unit as specified in the O-RAN fronthaul specification, and may be a concept including compression processing after combining.

The combining section 23 may generate a message related to a user-plane that follows a fronthaul transport protocol based on IQ data generated according to a combining operation. For convenience of explanation, a message generation function is described as being performed in the combining section 23, but the message generation function may be implemented in a separate section.

The interface section 21 may transmit messages generated by combining messages in an eAxC unit to a north-node (e.g., O-DU 10, see FIG. 1).

The interface section 21 may transmit the messages to the north-node according to the order in which the messages are generated, that is, the order in which the messages are generated according to a result of the combining operation. However, the present disclosure is not limited thereto. According to an embodiment, the interface section 21 may transmit messages generated according to the results of the combining operation based on a specific parameter (e.g., minimum of the last times Ta3_min, an FHM or cascade O-RU may transmit a user-plane message to an O-DU or north node based on reception timing at an O-RU antenna) considering an O-RU delay profile.

As such, according to a combining scheme according to an example embodiment of the present disclosure, compared to the existing combining scheme that waits until all symbols to be combined are received from an FHM or cascade O-RU and then combines them, a combining operation may be triggered in an eAxC unit more quickly, allowing time resources to be managed more effectively under limited fronthaul delay.

Furthermore, in addition to eAxC-unit combining operation triggering, combining operation triggering specified in the existing O-RAN fronthaul specification may be used complementary to each other, preventing errors due to missing (or dropping) messages.

In addition, by simplifying an eAxC-unit combining operation triggering procedure by considering transmission delay, additional delays due to eAxC unit combining operations performed at a higher frequency than before may be prevented.

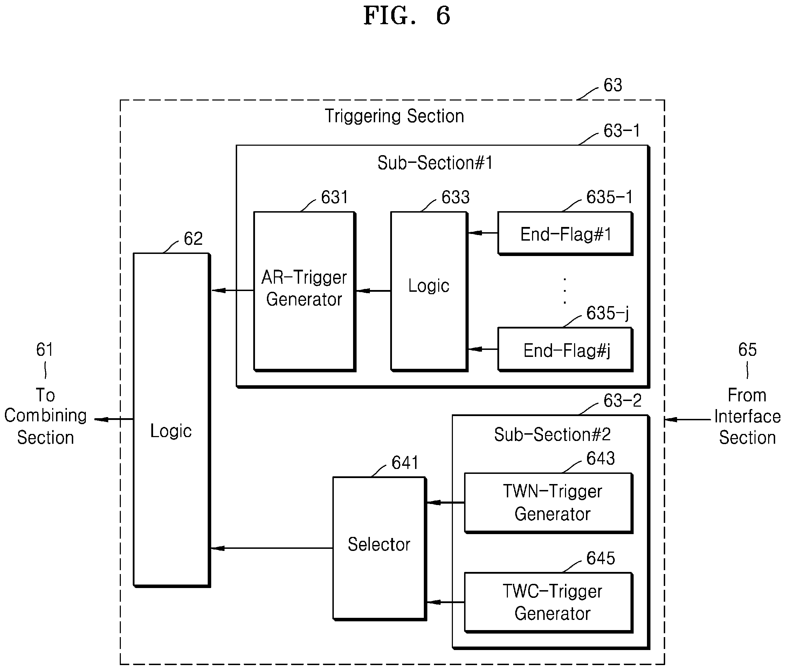

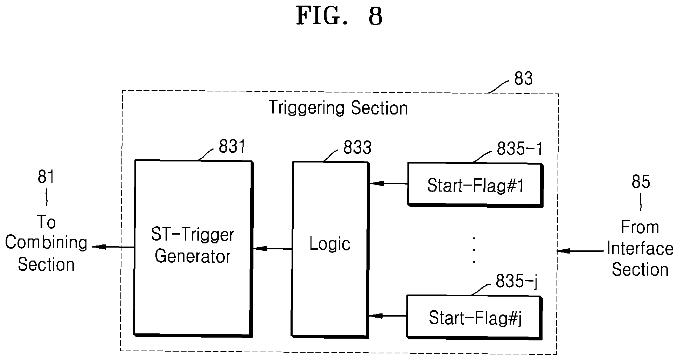

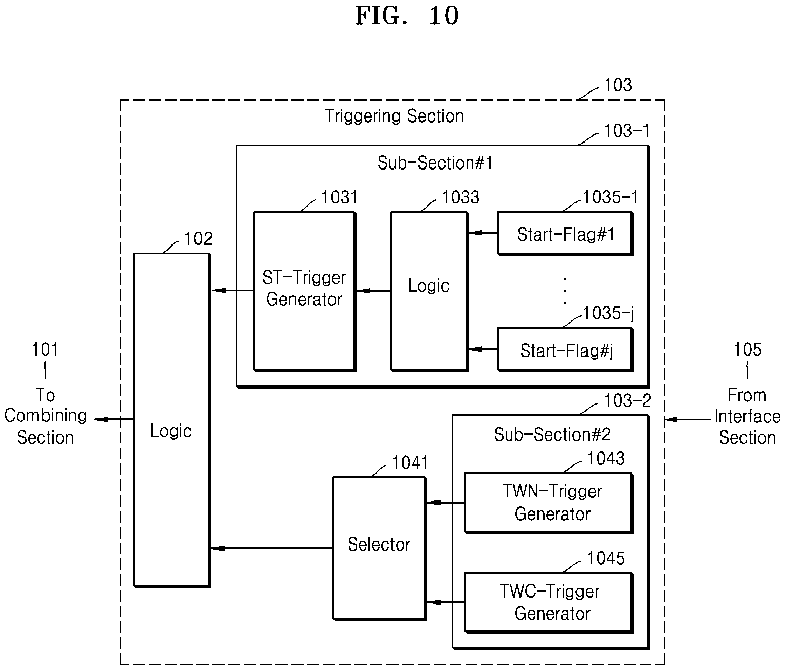

FIGS. 4 to 11 are views for explaining a node device supporting combining schemes and an operation method of the node device, according to an example embodiment of the present disclosure. In describing FIGS. 4 to 11, the embodiment of the present disclosure shown in FIG. 2 will be referred to together. For convenience of explanation, each of triggering sections of FIGS. 4 and 8 and sub-sections of FIGS. 6 and 10 is shown as a single configuration, but each section may be plural depending on the number of symbols.

FIG. 4 shows an embodiment of a triggering section of an FHM or cascade O-RU in a shared cell configuration.

Referring to FIG. 4, the triggering section 43 may include a first combining trigger generator 431, a logic 433, and first to jth end flag generators 435-1 to 435-j.

Each of the first to jth end flag generators 435-1 to 435-j may determine whether a final message is received for each eAxC unit with respect to messages of a corresponding antenna port from among user-plane messages received from multiple south-node devices, and generate an end flag if it is determined that the final message is received.

In an embodiment, the first to jth end flag generators 435-1 to 435-j may determine whether the final message is received in a specific eAxC unit based on whether messages are received consecutively in the specific eAxC unit.

Whether the messages are received consecutively may be determined based on whether messages received sequentially within a certain time have the same eAxC. For example, whether messages have an identical eAxC may be determined by searching for a certain parameter (e.g., filterindex).

Alternatively, whether the messages are received consecutively may be determined based on whether messages are received for a preset time after a message in any eAxC unit is received, using a W-timer. This is to prevent delays due to waiting when a reception interval between messages is long, and if a message does not arrive within a preset time, a message in a corresponding eAxC unit that has already been received may be determined to be the final message.

In another embodiment, the first to jth end flag generators 435-1 to 435-j may determine whether the final message is received in a specific eAxC unit based on certain information included in messages in the specific eAxC unit. A message received from south-nodes may include a certain field (e.g., subseq-ID) indicating whether the message received from south-nodes is the final message in the eAxC unit, and the first to jth end flag generators 435-1 to 435-j may determine whether the final message is received based on the field.

The logic 433 may perform a logical operation on end flags for each port generated by the first to jth end flag generators 435-1 to 435-j. For example, the logic 433 may perform an AND operation.

The first combining trigger generator 431 (hereinafter referred to as arrival (AR)-trigger) may generate a first combining trigger that indicates combining operation timing based on an operation result of the logic 433.

The first combining trigger generator 431 may determine whether an end flag for a message stream in a specific eAxC unit is generated in all ports based on an AND operation result of the logic 433, and when the end flag is generated in all ports, may determine that the final message is arrived from all ports in the specific eAxC unit and generate an AR-trigger that triggers a combining operation of messages in the specific eAxC unit.

According to an embodiment, the triggering section 43 may generate the AR-trigger using only user-plane messages received from a south-node device with the largest transmission delay from among a plurality of south-node devices. Because messages from the south-node device with the largest transmission delay are likely to arrive last, the AR-trigger may be generated based only on those messages.

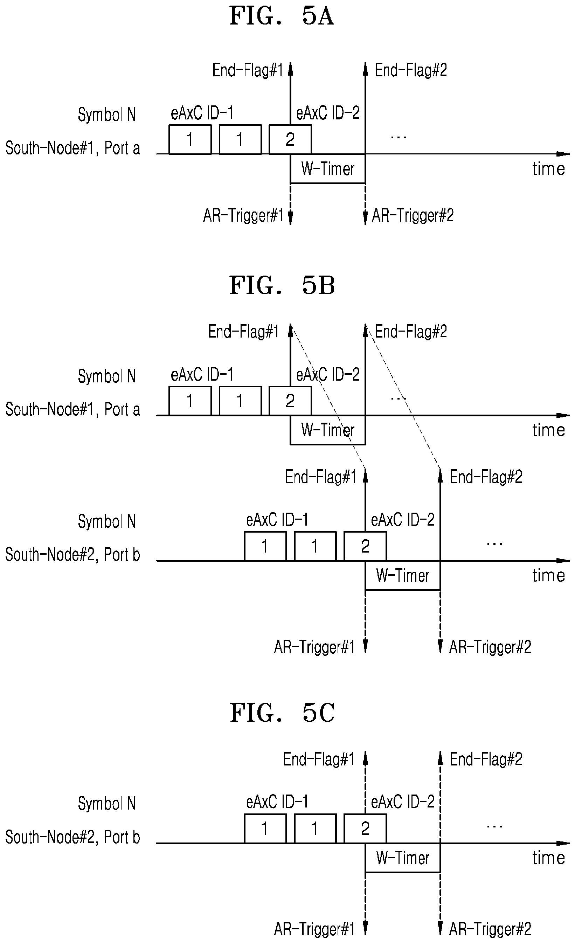

FIG. 5 is a view for explaining an operation of determining combining operation timing of messages related to a user-plane in an eAxC unit by the triggering section 43 of FIG. 4.

FIG. 5 (a) illustrates an operation of generating an AR-trigger based on messages in an eAxC unit for one antenna port.

Referring to FIG. 5 (a), an end flag generator corresponding to antenna port a of South-Node#1 may generate an end flag for eAxC ID-1 because messages related to eAxC ID-1 are received consecutively and messages of eAxC ID-2 are received, and generate an end flag for eAxC ID-2 because a subsequent message is not received during a specified time of a W-timer in the case of eAxC ID-2. The first combining trigger generator 431 may generate AR-triggers for eAxC ID-1 and eAxC ID-2 at generation timing of each end flag.

FIG. 5 (b) illustrates an operation of generating an AR-trigger based on messages in an eAxC unit for two antenna ports.

Referring to FIG. 5 (b), end flag generators corresponding to antenna port a of South-Node#1 and antenna port b of South-Node#2 may generate end flags for eAxC ID-1 and eAxC ID-2, respectively, as shown in FIG. 5 (a). The logic 433 may perform an AND operation on the generated end flags, and the first combining trigger generator 431 may generate AR-triggers for eAxC ID-1 and eAxC ID-2 respectively, at timing when all end flags are generated in each port according to an AND operation result of the logic 433.

FIG. 5 (c) illustrates an operation of generating an AR-trigger for messages in an eAxC unit for two antenna ports, considering only messages of South-Node#2, which has a relatively larger transmission delay, from among transmission delays of South-Node#1 and South-Node#2.

Referring to FIG. 5 (c), only an end flag generator corresponding to antenna port b of South-Node#2, which has a relatively larger transmission delay, may generate end flags for eAxC ID-1 and eAxC ID-2 as shown in FIG. 5 (a). The first combining trigger generator 431 may generate AR-triggers for eAxC ID-1 and eAxC ID-2 at generation timing of each end flag.

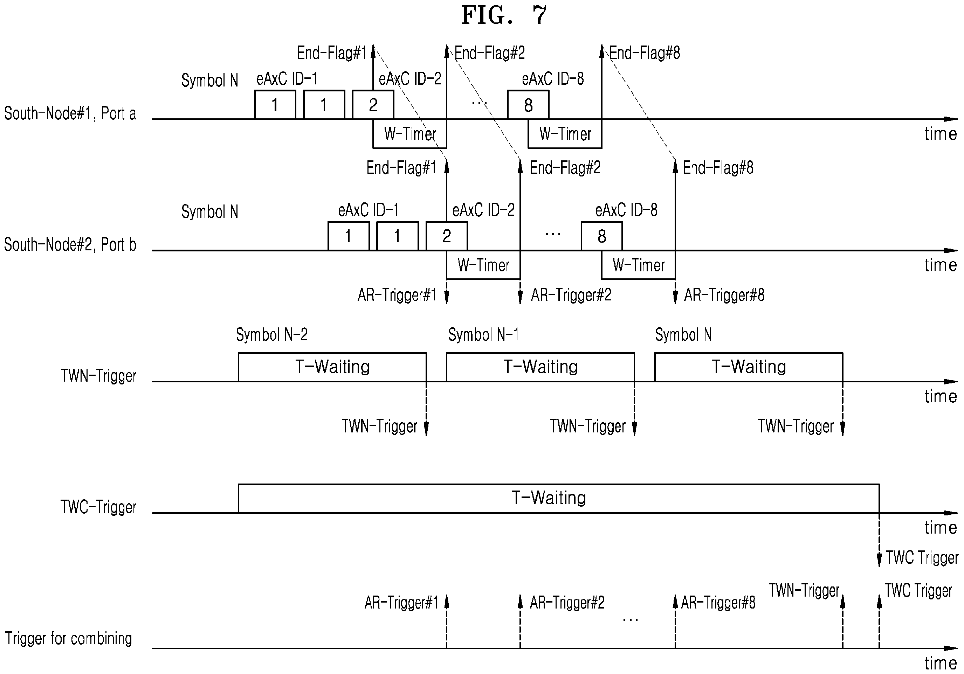

FIG. 6 is a view illustrating another embodiment of a triggering section of an FHM or cascade O-RU in a shared cell configuration. A triggering section 63 is a variation of the triggering section 43 in FIG. 4, and is an embodiment that determines combining operation timing of messages by complementary use of an AR-trigger and a timing window (TW)-trigger based on timing-related information. FIGS. 6 and 7 are described with reference to FIGS. 4 and 5 and repeated descriptions thereof will not be given herein.

Referring to FIG. 6, the triggering section 63 may include a first sub-section 63-1 for generating AR-triggers, a second sub-section 63-2 and a selector 641 for generating and selecting TW-triggers, and a logic 62 for selection of AR-triggers and/or TW-triggers.

The first sub-section 63-1 may generate an AR-trigger substantially the same as the triggering section 43 of FIG. 4 did. The first sub-section 63-1 may output the generated AR-trigger to the logic 62.

The second sub-section 63-2 may include a TWN-trigger generator 643 and a TWC-trigger generator 645.

Triggers generated by the TWN-trigger generator 643 and the TWC-trigger generator 645 are based on the content specified in standard specifications of an O-RAN fronthaul, and each of the triggers may be calculated from a frame structure and control-plane timing applied to an eAxC unit.

For example, the TWN-trigger generator 643 may determine a waiting time by giving an offset to a normal frame structure applied to an eAxC unit of PUSCH/PUCCH (e.g., determined by sub-carrier spacing (SCS) and N_TA_Offset, etc.) and then generate a TWN-trigger that triggers a combining operation at the end of the waiting time.

For example, the TWC-trigger generator 645 may determine a waiting time from an eAxC unit of PRACH and timing of a control-plane and then generate a TWC-trigger that triggers a combining operation at the end of the waiting time.

A reference time of the TWN-trigger may be a starting point including a cyclic prefix (CP) of a symbol, a reference time of the TWC-trigger may be a starting point of sequence duration excluding PRACH CP, and these may be calculated by time offset and CP length.

The TWN-trigger and TWC-trigger may be calculated as (Ta3-Prime_max)-(T_Combine_Net)-(Txwindow) based on their respective reference times. Ta3_Prime_max may mean a maximum value of the last time an FHM or cascade O-RU may transmit a user-plane message to an O-DU or north-node based on reception timing at an O-RU antenna, T_Combine_net may mean a maximum processing delay of an FHM or cascade O-RU between a start time of combining IQ samples in a received message and a start time of transmitting a message to an O-DU or north-node through a fronthaul interface, and Txwindow may mean a time an FHM or cascade O-RU needs to wait for an uplink user-plane message sent from a south-node O-RU.

A TWN-trigger and TWC-trigger generated by the second sub-section 63-2 may be used selectively or simultaneously because applied eAxC units are different.

The selector 641 may select at least one of the generated TWN-trigger and TWC trigger and output it to the logic 62.

The logic 62 may perform logical operations on the generated AR-trigger, TWN-trigger, and TWC trigger. For example, the logic 62 may perform an OR operation.

The logic 62 may output at least one of an AR-trigger, TWN-trigger, and TWC-trigger, and a combining operation of messages in an eAxC unit may be triggered according to the trigger output from the logic 62.

With further reference to FIG. 7, the triggering section 63 may trigger a combining operation of messages in an eAxC unit by selectively using AR-triggers respectively generated for eAxC ID-1, eAxC ID-2, and eAxC ID-8 at timing when all end flags are generated in each port, a TWN-trigger calculated based on reception latency, and a TWC-trigger.

As such, even if an error such as missing messages occurs when controlling a message combining operations in an eAxC unit based on whether a message stream of a specific eAxC unit is finally received, combining operations may be performed additionally in an eAxC unit for messages missed by a TWN-trigger or TWC-trigger, thereby minimizing errors when combining messages and effectively responding to error situations.

FIG. 8 shows another embodiment of a triggering section of an FHM or cascade O-RU in a shared cell configuration.

Referring to FIG. 8, the triggering section 83 may include a second combining trigger generator 831, a logic 833, and first to jth start flag generators 835-1 to 835-j.

Each of the first to jth start flag generators 835-1 to 835-j may determine whether an initial message is received for each eAxC unit with respect to messages of a corresponding antenna port from among user-plane messages received from multiple south-node devices, and generate a start flag if it is determined that the initial message is received.

The logic 833 may perform a logical operation on start flags for each port generated by the first to jth start flag generators 835-1 to 835-j. For example, the logic 833 may perform an AND operation.

The second combining trigger generator 831 (hereinafter referred to as start (ST)-trigger) may generate a second combining trigger that indicates combining operation timing based on an operation result of the logic 833.

The second combining trigger generator 831 may determine whether a start flag for a message stream in a specific eAxC unit is generated in all ports based on an AND operation result of the logic 833, and when the start flag is generated in all ports, may determine that the initial message is arrived in the specific eAxC unit and generate an ST-trigger that triggers a combining operation of messages in the specific eAxC unit.

When a start flag is generated in all ports, the second combining trigger generator 831 may generate the ST-trigger at a point in time when a generation point in time of the last start flag is delayed by a certain time (e.g., eAxC message duration) using an S-timer.

According to an embodiment, the triggering section 83 may generate the ST-trigger using only user-plane messages received from a south-node device with the largest transmission delay from among a plurality of south-node devices. Because messages from the south-node device with the largest transmission delay are likely to arrive last, the ST-trigger may be generated based only on those messages.

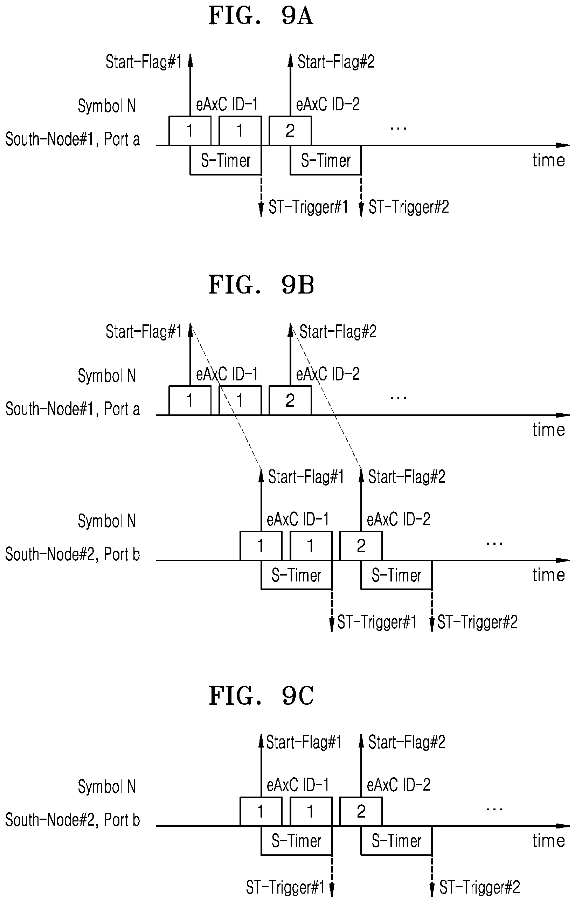

FIG. 9 is a view for explaining an operation of determining combining operation timing of messages related to a user-plane in an eAxC unit by the triggering section 83 of FIG. 8.

FIG. 9 (a) illustrates an operation of generating an ST-trigger based on messages in an eAxC unit for one antenna port.

Referring to FIG. 9 (a), because messages about eAxC ID-1 are received and messages about eAxC ID-2 are received, a start flag generator corresponding to antenna port a of South-Node#1 may generate a start flag in each message. The second combining trigger generator 831 may generate ST-triggers for eAxC ID-1 and eAxC ID-2 at a point in time delayed by a certain time (e.g., a time set by an S-Timer) based on a generation point in time of each of start flags.

FIG. 9 (b) illustrates an operation of generating an ST-trigger based on messages in an eAxC unit for two antenna ports.

Referring to FIG. 9 (b), start flag generators corresponding to antenna port a of South-Node#1 and antenna port b of South-Node#2 may generate start flags for eAxC ID-1 and eAxC ID-2, respectively, as shown in FIG. 9 (a). The logic 833 may perform an AND operation on the generated start flags, and the second combining trigger generator 831 may generate ST-triggers for eAxC ID-1 and eAxC ID-2, respectively, by delaying a point in time when all start flags are generated in each port by a certain time according to a result of the AND operation of the logic 833.

FIG. 9 (c) illustrates an operation of generating an ST-trigger for messages in an eAxC unit for two antenna ports, considering only messages of South-Node#2, which has a relatively larger transmission delay, from among transmission delays of South-Node#1 and South-Node#2.

Referring to FIG. 9 (c), only a start flag generator corresponding to antenna port b of South-Node#2, which has a relatively larger transmission delay, may generate start flags for eAxC ID-1 and eAxC ID-2 as shown in FIG. 9 (a). The second combining trigger generator 831 may generate ST-triggers for eAxC ID-1 and eAxC ID-2 by delaying a generation point in time of each of the generated start flags by a certain time.

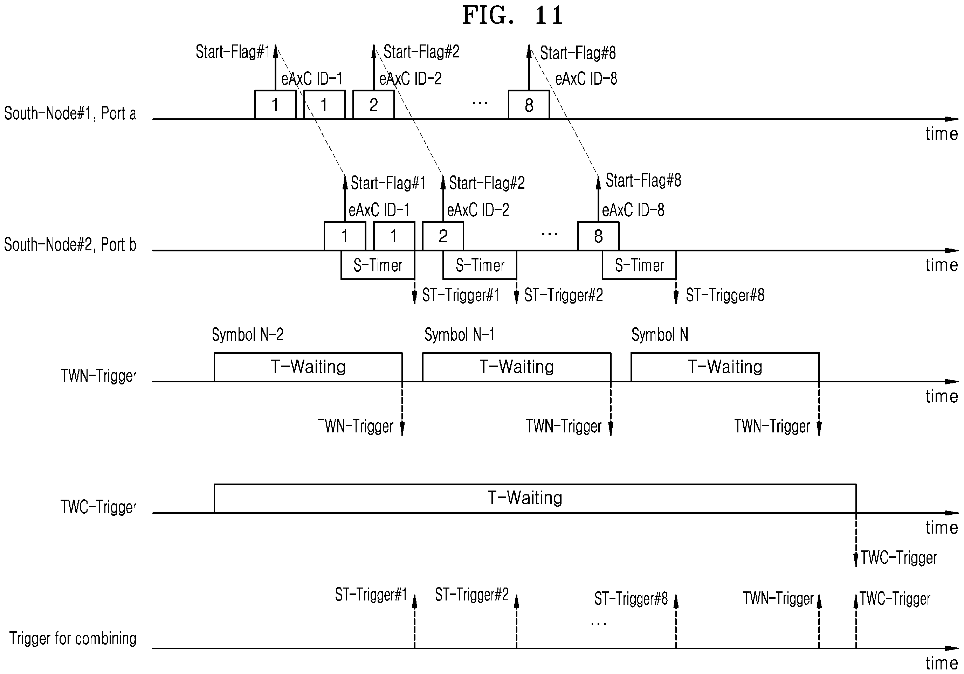

FIG. 10 is a view illustrating another embodiment of a triggering section of an FHM or cascade O-RU in a shared cell configuration. A triggering section 103 is a variation of the triggering section 83 in FIG. 8, and is an embodiment that determines combining operation timing of messages by complementary use of an ST-trigger and a TW-trigger based on timing-related information. FIGS. 10 and 11 are described with reference to FIGS. 6 to 9 and repeated descriptions thereof will not be given herein.

Referring to FIG. 10, the triggering section 103 may include a first sub-section 103-1 for generating an ST-trigger, a second sub-section 103-2 and a selector 1041 for generating and selecting a TW-trigger, and a logic 102 for selection of an ST-trigger and TW-trigger.

The first sub-section 103-1 may generate an ST-trigger substantially the same as the triggering section 83 of FIG. 8 did. The first sub-section 103-1 may output the generated ST-trigger to the logic 102.

The second sub-section 103-2 may include a TWN-trigger generator 1043 and a TWC-trigger generator 1045, and may generate a TWN-trigger and TWC-trigger in substantially the same way as the second sub-section 63-2 of FIG. 6. The selector 1041 may select at least one of the generated TWN-trigger and TWC trigger and output it to the logic 102.

The logic 102 may perform logical operations on the generated AR-trigger, TWN-trigger, and TWC trigger. For example, the logic 102 may perform an OR operation.

The logic 102 may output at least one of an ST-trigger, TWN-trigger, and TWC-trigger, and a combining operation of messages in an eAxC unit may be triggered according to the trigger output from the logic 102.

With further reference to FIG. 11, the triggering section 63 may trigger a combining operation of messages in an eAxC unit by selectively using SR-triggers respectively generated for eAxC ID-1, eAxC ID-2, and eAxC ID-8 by delaying a point in time when all start flags are generated in each port by a certain time, a TWN-trigger calculated based on reception latency, and a TWC-trigger.

As such, even if an error such as missing messages occurs when controlling a message combining operations in an eAxC unit based on whether a message stream of a specific eAxC unit is first received, combining operations may be performed additionally in an eAxC unit for messages missed by a TWN-trigger or TWC-trigger, thereby minimizing errors when combining messages and effectively responding to error situations.

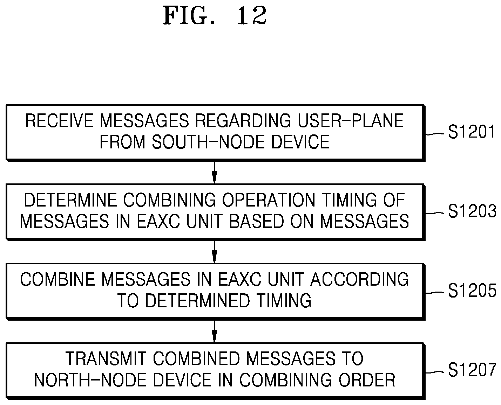

FIGS. 12 to 14 are flowcharts for explaining an operation method of a node device supporting combining schemes, according to an example embodiment of the present disclosure. FIGS. 12 to 14 are flowcharts for explaining combining operation processes performed in an FHM or cascade O-RU in a shared cell configuration, and the following description will focus on an embodiment in which the processes are performed in the FHM 20 of FIG. 2.

In operation S1201, the FHM 20 receives messages regarding a user-plane from at least one south-node device. The messages are messages for each of antenna ports of south-node devices, and the messages for each antenna port may be consecutive in an identical eAxC unit. In addition, messages in an eAxC unit received from each of the south-node devices may have an identical eAxC unit arrangement order.

In operation S1203, the FHM 20 determines combining operation timing of messages in an eAxC unit based on the received messages.

The FHM 20 may determine the combining operation timing based on a determination result of whether the messages are received first or last. Alternatively, the FHM 20 may determine the combining operation timing using waiting time-related information calculated based on a frame structure applied to a message in the eAxC unit and timing of a control-plane message applied to the eAxC unit, along with the determination result of whether the messages are received first or last.

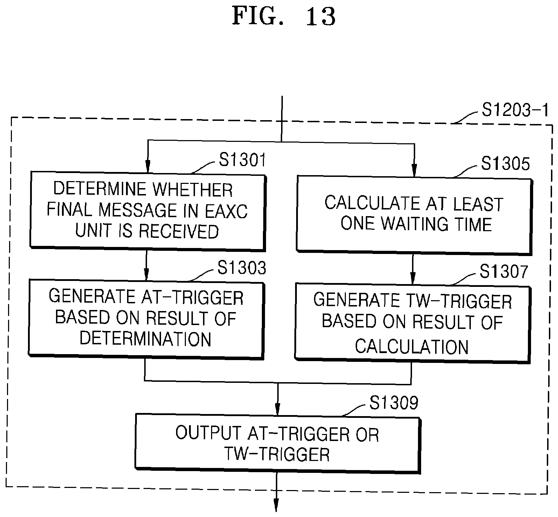

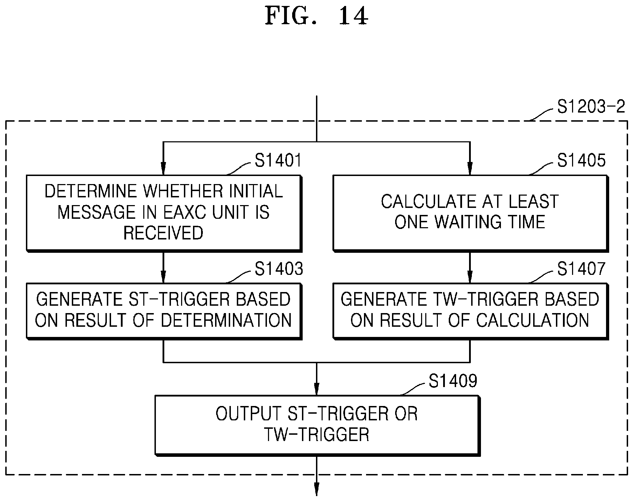

The process of determining the combining operation timing of the FHM 20 will be described in more detail with reference to FIGS. 13 and 14.

First, referring to FIG. 13, in operation S1301, the FHM 20 determines whether a final message in an eAxC unit is received.

In some embodiments, the FHM 20 may determine whether a message stream for a specific eAxC unit is finally received from all antenna ports. The FHM 20 may determine whether the message stream is finally received based on the continuity of messages in an eAxC unit, information indicating the final message, etc.

In another embodiment, the FHM 20 may determine whether a message stream for a specific eAxC unit is finally received by using only messages received from a south-node device with the largest transmission delay value for the FHM 20.

In operation S1303, as a result of the determination, if it is determined that the final message in the eAxC unit is received, the FHM 20 generates an AT-trigger.

In operation S1305, the FHM 20 calculates a waiting time from the frame structure applied to the message in the eAxC unit and the timing of the control-plane message applied to the eAxC unit, and in operation S1307, generates a TW-trigger based on a result of the calculation.

In operation S1309, the FHM 20 outputs the generated AT-trigger and/or TW-trigger.

Next, referring to FIG. 14, in operation S1401, the FHM 20 determines whether an initial message in an eAxC unit is received.

In some embodiments, the FHM 20 may determine whether a message stream for a specific eAxC unit is first received from all antenna ports.

In another embodiment, the FHM 20 may determine whether a message stream for a specific eAxC unit is first received by using only messages received from a south-node device with the largest transmission delay value for the FHM 20.

In operation S1403, as a result of the determination, if it is determined that the initial message in the eAxC unit is received, the FHM 20 generates an ST-trigger.

In operation S1405, the FHM 20 calculates a waiting time from the frame structure applied to the message in the eAxC unit and the timing of the control-plane message applied to the eAxC unit, and in operation S1407, generates a TW-trigger based on a result of the calculation.

In operation S4309, the FHM 20 outputs the generated ST-trigger and/or TW-trigger.

Referring again to FIG. 12, in operation S1205, the FHM 20 combines messages of each port in an eAxC unit according to the determined timing.

In operation S1207, the FHM 20 transmits the combined messages to a north-node device in a combining order.

The methods described with reference to FIGS. 12 and 14 include one or more operations or actions for achieving the methods. At least some of the operations and/or actions for achieving the methods may be interchanged with one another or omitted without departing from the scope of the claims. In other words, the order and/or use of specific operations and/or actions may be modified without departing from the scope of the claims, unless a certain order for the operations and/or actions is specified.

In addition, various operations of the methods described above may be performed by any suitable means capable of performing corresponding functions. The means includes, but is not limited to, various hardware and/or software components and/or modules such as an application specific integrated circuit (ASIC) or a processor. In general, when there are operations corresponding to the drawings, these operations may have a corresponding counterpart and functional components having the same number as the number of the counterpart.

In addition, the methods described above may be implemented as program commands which can be executed by various computer devices, and recorded on a computer-readable medium. The computer-readable medium may include program commands, data files, data structures or a combination thereof. Program instructions recorded on the computer-readable medium may be particularly designed and structured for the present invention or available to those skilled in computer software. Examples of the computer-readable medium include hardware devices that are specially configured to store and execute program commands, such as a read-only memory (ROM), a random access memory (RAM), and a flash memory. Program commands may include, for example, high-level language code that can be executed by a computer using an interpreter, as well as machine language code made by a compiler. The above hardware devices may be configured to operate as one or more software modules to perform the operations of the present disclosure, and vice versa.

Numerous modifications and adaptations will be readily apparent to one of ordinary skill in the art without departing from the spirit and scope of the present disclosure.

Accordingly, the embodiments illustrated in the present disclosure are not intended to limit the technical idea of the present disclosure but are for illustrative purposes, and the scope of the technical idea of the present disclosure is not limited by these embodiments.

The scope of protection of the technical idea of the present disclosure should be interpreted in accordance with the claims below, and all technical ideas within the equivalent scope should be construed as being included in the scope of technical ideas of the present disclosure.

## Claims

1. A method of operating a node device in an open radio access network (O-RAN), the method comprising:
receiving messages related to a user-plane from at least one south-node device; and
determining combining operation timing of the messages in an extended antenna-carrier (eAxC) unit, based on the messages.

2. The method of claim 1, wherein the determining comprises:
determining whether a final message in the eAxC unit is received from at least one port; and
generating, when it is determined that the final message is received, a first combining trigger that indicates the combining operation timing of the messages in the eAxC unit.

3. The method of claim 2, wherein the determining comprises:
determining based on whether the messages in the eAxC unit are consecutively received from the at least one port.

4. The method of claim 1, wherein the determining comprises:
determining whether an initial message in the eAxC unit is received from at least one port; and
generating, when it is determined that the initial message is received, a second combining trigger that indicates the combining operation timing of the messages in the eAxC unit.

5. The method of claim 4, wherein the generating of the second combining trigger comprises:
generating the second combining trigger by delaying timing at which the initial message is received by a preset time.

6. The method of claim 1, wherein the at least one south-node device comprises a plurality of south-node devices, and
the determining comprises using messages received from a south-node device with a largest transmission delay to the node device from among the plurality of south-node devices.

7. The method of claim 1, wherein, among the messages, messages in an identical eAxC unit are received consecutively.

8. The method of claim 7, wherein the at least one south-node device comprises a plurality of south-node devices, and,
in messages received from each of the plurality of south-node devices, a reception order based on the eAxC unit is identical.

9. The method of claim 1 comprising:
combining the messages in the eAxC unit according to the determined timing; and
transmitting the combined messages to a north-node device in a combining order.

10. A node device of O-RAN, the node device comprising:
at least one processor,
wherein the at least one processor is configured to determine combining operation timing of messages related to a user-plane received from at least one south-node device in an eAxC unit based on the messages.

11. The node device of claim 10, wherein the at least one processor is further configured to:
determine whether a final message in the eAxC unit is received from at least one port; and
generate, when it is determined that the final message is received, a first combining trigger that indicates the combining operation timing of the messages in the eAxC unit.

12. The node device of claim 11, wherein the at least one processor is further configured to:
determine whether the final message in the eAxC unit is received based on whether the messages in the eAxC unit are consecutively received from the at least one port.

13. The node device of claim 10, wherein the at least one processor is further configured to:
determine whether an initial message in the eAxC unit is received from at least one port; and
generate, when it is determined that the initial message is received, a second combining trigger that indicates the combining operation timing of the messages in the eAxC unit.

14. The node device of claim 13, wherein the at least one processor is further configured to:
generate the second combining trigger by delaying timing at which the initial message is received by a preset time.

15. The node device of claim 10, wherein the at least one south-node device comprises a plurality of south-node devices, and
the at least one processor is further configured to:
determine the combining operation timing of the messages in the eAxC unit by using messages received from a south-node device with a largest transmission delay to the node device from among the plurality of south-node devices.

16. The node device of claim 10, wherein, among the messages, messages in an identical eAxC unit are received consecutively.

17. The node device of claim 16, wherein the at least one south-node device comprises a plurality of south-node devices, and
in messages received from each of the plurality of south-node devices, a reception order based on the eAxC unit is identical.

18. The node device of claim 10, wherein the at least one processor is further configured to:
combine the messages in the eAxC unit according to the determined timing; and
control transmission of the combined messages to a north-node device in a combining order.
